## Europäisches Patentamt

## European Patent Office

## Office européen des brevets

(19)

(11) Numéro de publication: **0 084 384
B1**

(12) ## FASCICULE DE BREVET EUROPEEN

(45) Date de publication du fascicule du brevet:
23.04.86

(51) Int. Cl.⁴: **B 29 C 67/20**

(21) Numéro de dépôt: **83200002.0**

(22) Date de dépôt: **04.01.83**

(54) **Procédé pour le moussage en continu de matières plastiques.**

(30) Priorité: **18.01.82 IT 6704682**

(43) Date de publication de la demande:
**27.07.83 Bulletin 83/30**

(45) Mention de la délivrance du brevet:
**23.04.86 Bulletin 86/17**

(84) Etats contractants désignés:
**AT BE CH DE FR GB LI NL SE**

(56) Documents cités:
**DE - A - 2 449 107
DE - A - 2 813 137
FR - A - 2 137 729
FR - E - 95 213
US - A - 3 812 227**

(73) Titulaire: **S.p.A. Giuseppe Olmo Superflexite Italiana,
Strada Provinciale 119 per Spirano, I-24040 Comun
Nuovo BG (IT)**

(72) Inventeur: **Melle, Bruno, Via Lampugnano 144,
I-20151 Milano Mi (IT)**

(74) Mandataire: **Patrito, Pier Franco, Dr. Ing., Cabinet
PATRITO BREVETTI Via Don Minzoni 14, I-10121 Torino
(IT)**

## Description

La présente invention se réfère aux procédés de moussage en continu de matières plastiques, spécialement mais non exclusivement pour la production de blocs de mousse de polyuréthane et similaires.

Dans ces procédés, le mélange de produits de départ, destinés à réagir et à se transformer en mousse, est versé sur un ruban de matériel flexible, lequel avance sur un transporteur à bande, qui définit la base des blocs qu'on veut produire, et qui est replié verticalement pour définir aussi les flancs des mêmes blocs, ou bien il est accompagné par d'autres rubans séparés définissant ces flancs, et dans certains cas il est encore accompagné par un autre ruban qui définit la surface supérieure des blocs. Cex rubans délimitent l'espace dans lequel a lieu l'expansion de la mousse du mélange en réaction, et ils définissent donc la forme de la mousse solidifiée. Dès que la solidification est suffisante, on détache lesdits rubans flexibles du matériel qui avance encore en continu et on coupe ensuite le matériel en blocs des dimensions désirées, qui sont portés sur des étagères appropriées où les réactions en cours se complètent. Comme rubans flexibles pour le but indiqué on emploie normalement des rubans de papier. Bien que ce papier soit traité exprès pour limiter sa perméabilité, des quantités importantes du mélange versé sont absorbées par le papier et elles sont ensuite emportées avec le papier, avec le double inconvénient d'un gaspillage de matériel et d'une pollution du papier, qu'on ne peut récupérer même comme pâte de papeterie et qui pose par conséquent des problèmes d'élimination. Dans les cas où la bande du trasporteur est chauffée pour réduire l'épaisseur de la peau non moussée qui se forme à la base des blocs, la peau peut adhérer tellement au papier qu'elle se détache du bloc au moment où l'on détache le papier, ainsi produisant une autre forte perte de matériel. Dans certaines conditions il se vérifie même une transsudation de substances à travers le papier, avec un conséquent souillement des installations.

Pour remédier à ces inconvénients on a tenté d'employer des rubans imperméables, par exemple de polyéthylène, au lieu du papier, mais les résultats ne semblent pas satisfaisants à cause de l'insuffisante rigidité des rubans; d'autre part, la récupération du matériel de ces rubans, indispensable en considération de leur prix de revient, pose des considérables problèmes techniques.

On a aussi tenté de superposer, à un ruban de papier qui vient d'un rouleau, un ruban de polyéthylène relativement mince qui vient d'un autre rouleau, mais il n'est pas résulté possible, en conditions de gestion industrielle, d'assurer que le mince ruban de polyéthylène adhère en plan et sans froncis au ruban de papier malgré les contraintes qu'on doit appliquer pour produire l'avancement des rubans.

Par la publication FR-E 95 213 il est aussi connu de disposer, dans l'installation de moussage, des rouleaux de ruban de papier de support et des rouleaux de ruban de polyéthylène; de coupler entre eux ces deux rubans dans l'installation, par un adhésif déplaçable; de saisir le ruban de polyéthylène par des rouleaux de pincement et de le déplacer par rapport au ruban de papier contre l'action de l'adhésif; et enfin de renvider sur un rouleau le ruban de polyéthylène toujours accouplé avec le ruban de papier. Cette disposition atteint le but de déplacer les parois de l'espace de moussage pendant la croissance de la mousse, de sorte à obtenir une surface supérieure substantiellement plane de celle-ci. Toutefois la disposition n'est pas en condition de protéger entièrement le ruban de papier contre la pollution, ni d'empêcher entièrement la transsudation du mélange en réaction, car la partie inférieure des rubans de papier reste dépourvue de la protection assurée par le ruban de polyéthylène lors que celui-ci est déplacé par rapport au ruban de papier. D'autre côté les rubans de papier et de polyéthylène, renvidés à l'état accouplé, constituent une masse dont la récupération serait extrêmement difficile sinon impossible. Cela comporte une perte importante de matériel, car le ruban de polyéthylène doit présenter, dans ce cas, une épaisseur relativement élevée, d'un côté pour autoriser l'opération d'accouplement avec le ruban de papier sans l'emploi d'installations spéciales, et d'autre côté pour permettre aux rouleaux de pincement de déplacer le ruban de polyéthylène par rapport au ruban de papier, contre l'action de l'adhésif, sans le déchirer.

Le but de la présente invention est de resoudre rationnellement le problème d'éliminer ou de limiter les susdits inconvénients qui se présentent dans la production en continu de mousses, et particulièrement d'empêcher le souillement du ruban de papier et la transsudation du mélange de réaction, et d'eliminer ou de limiter les pertes des matériaux constituant les ruban employés pour délimiter l'espace de moussage.

Ce but est atteint, suivant l'invention, dans un procédé pour le moussage en continu de matières plastiques, du type dans lequel l'espace de moussage est limité par des rubans flexibles guidés de sorte à accompagner les surfaces correspondantes du matériel en cours d'expansion et de consolidation, et dans lequel chaque ruban flexible comprend un ruban de support de papier et un ruban de matière plastique, superposé audit ruban de papier du côté intérieur par rapport à l'espace de moussage et ayant une adhésion limitée par rapport audit ruban de papier, par le fait que comme ruban flexible on emploie un ruban accouplé, préparé et enroulé avant l'introduction dans l'installation de moussage; que ledit ruban flexible comprend un ruban de matière plastique d'une épaisseur comprise entre 5 et 20 microns; et qu'on détache le ruban de papier du matériel en mousse formé en le désaccouplant du ruban de matière plastique, en enroulant séparément ledit ruban de papier et en laissant ledit ruban de matière plastique au moins temporairement adhérent à la mousse.

Grâce à cette façon de procéder, le ruban de matière plastique employé est extrèmement mince et donc économique; il protège la surface toute entière du ruban de papier, et donc on obtient une complète imperméabilité des rubans qui délimitent l'espace d'expansion et, par conséquent, le ruban de papier qui est détaché de la mousse formée n'emporte avec lui aucune trace de matériel en mousse ou de ses composants, en évitant ainsi systématiquement le gaspillage de ces matières et, en outre, en rendant possible la complète récupération du papier non pollué. Même dans le cas où le chauffage du ruban transporteur est poussé pour réduire au minimum l'épaisseur de la peau qui se forme à la base du pain de mousse, il n'y a aucun risque d'arrachement de cette peau quand on détache le ruban de papier. Aucune transsudation n'est possible, et on évite ainsi tout souillement de l'installation.

Dans une première manière d'application de l'invention, le ruban de matière plastique très mince qui, à l'origine, était accouplé au ruban de papier, et duquel ce dernier a été détaché, est laissé adhérent aux surfaces correspondantes du bloc en mousse qui s'est formé, sans que cela entraîne, en général, aucun inconvénient. En effet, le ruban de matière plastique très mince sera en son temps emporté du bloc formé, en même temps que la couche de peau présentée par le bloc, laquelle doit être coupée et enlevée. Au contraire, dans une seconde manière d'application de l'invention, le ruban en matière plastique est détaché à son tour de la mousse formée, après le détachement du ruban de papier, et il est recueilli séparément de l'autre ruban et envoyé à la récupération.

Le fait d'employer un ruban accouplé, dans lequel un ruban de papier agit comme support pour un ruban très mince de matière plastique, permet de limiter beaucoup la consommation de matière plastique, en vue de la possibilité de réduire au minimum, par exemple dans l'ordre du centième de millimètre, son épaisseur, tandis qu'un ruban d'une épaisseur tellement réduite, non accouplé à un ruban de papier, ne pourrait trouver aucun emploi dans une installation industrielle de moussage. L'adhésion entre les deux composants du ruban accouplé, bien que réduite, assure la planéité parfaite du ruban intérieur en matière plastique, sans rendre nécessaire aucune précaution particulière dans le traitement du ruban accouplé par rapport à un ruban ordinaire de papier. Le papier inclus dans l'accouplé peut être de qualité inférieure à celui qu'on emploie ordinairement, puisque on n'en exige de lui aucune imperméabilité, en consentant ainsi une réduction du prix de revient. La matière plastique incluse dans l'accouplé peut être choisie dans un vaste champ de possibilités et, particulièrement, elle peut être constituée par un économique polyéthylène auquel on ne demande pas de propriétés particulières. L'accouplé, comme tel, résulte en outre économique parce qu'on lui demande une basse adhésion entre les composants, tandis que la difficulté qu'on encontre généralement dans la production des accouplés, et est surmontée par des opérations qui en augmentent le prix de revient, est celle d'obtenir une plus forte adhésion entre les composants.

Dans sa première forme de mise en œuvre, qui prévoit de laisser le ruban de matière plastique adhérent à la mousse formée, l'invention peut trouver son application dans une installation ordinaire de moussage, sans en demander aucune modification ou adaptation, mais seulement la substitution des rouleaux de papier habituellement employés par des rouleaux similaires de ruban accouplé. Dans la seconde forme de mise en œuvre, l'application de l'invention exige une adaptation des installations habituelles, avec doublement des moyens d'éloignement des rubans de la mousse formée, les premiers de ces moyens pourvoyant au détachement et au recueil du papier et les seconds pourvoyant séparément au détachement et recueil du ruban très mince de matière plastique.

On pourrait aussi prévoir le détachement de l'accouplé sans séparer ses composants (dans ce cas l'exigence initiale d'employer un accouplé à basse adhésion n'existerait pas), mais cette manière de procéder résulte moins avantageuse car elle gêne gravement la successive récupération du papier et de la matière plastique ainsi restés accouplés.

Ce qui a une grande importance pratique c'est le fait que l'invention est applicable sans difficultés aux installations de moussage de tous les différents genres existants. Elle peut concerner tous ou seulement une partie des rubans employés dans une installation; naturellement, le plus grand avantage est celui de l'application de l'invention au ruban inférieur sur lequel est versé le mélange réactif. L'invention peut donc être appliquée seulement au ruban replié en «U» formant la base et les flancs de l'espace de moussage, dans les installations à un seul ruban, ou bien elle peut être appliquée au seul ruban de base ou encore à ce ruban ainsi qu'aux rubans latéraux dans les installations à trois rubans; elle peut être appliquée au ruban supérieur destiné à rendre plane la surface superieure du bloc formé, dans les installations du type Hennecke et Planiblock; elle est compatible avec la présence des rubans latéraux en polyéthylène, déviés vers le haut, dans les installations du type Draka et Petzetakis, et elle peut trouver, naturellement, son application même dans les installations du type Maxfoam, quoique dans ces dernières le ruban de base ne reçoit pas directement le mélange réactif mais un matériel mousseux qui a déjà réagit partiellement.

L'invention peut trouver son application soit dans la production de mousses flexibles que dans la production de mousses rigides, à cellules ouvertes ou closes et de caractéristiques différentes. Le domaine d'application principal est celui du moussage de composés polyuréthaniques mais, bien entendu, l'invention peut être appliquée au moussage d'autres matières synthétiques présentant des exigences similaires.

Les particularités du procédé selon l'invention apparaîtront plus clairement de la suivante description de certains exemples d'application, faite avec référence au dessins schématiques annexés, dans lesquels:

la figure 1 illustre le schéma d'une installation traditionnelle, dans laquelle l'invention est appliquée dans une première forme qui prévoit que le composant en matière plastique du ruban accouplé soit laissé adhérant aux blocs de mousse formés;

la figure 2 illustre le schéma analogue dans le cas d'application de la seconde forme de l'invention, dans laquelle le composant en matière plastique du ruban accouplé est détaché lui aussi des blocs formés;

la figure 3 montre comment l'invention, dans ce cas dans sa première forme, peut être appliquée au ruban supérieur dans un procédé du type Hennecke ou Planiblock;

la figure 4 illustre l'application de l'invention, dans sa seconde forme, au ruban supérieur dans un procédé Hennecke ou Planiblock;

la figure 5 montre en plan l'application de l'invention aux rubans latéraux d'une installation à trois rubans, dans la première forme de réalisation;

la figure 6 montre de manière similaire l'application de la seconde forme de l'invention aux rubans latéraux d'une installation;

la figure 7 montre un tronçon de ruban accouplé avec ses composants partiellement séparés;

la figure 8 montre en très grande échelle une section du ruban accouplé; et

la figure 9 montre en très grande échelle un bout de bloc formé en mousse solidifiée ayant un ruban de matière plastique adhérent à sa surface.

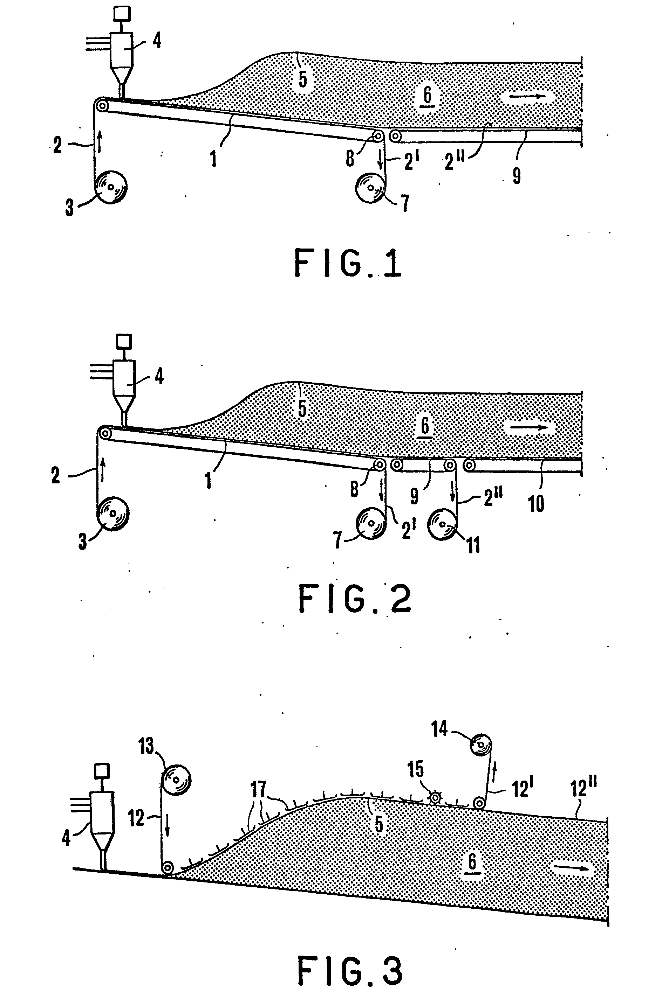

Le schéma de la figure 1 illustre une installation traditionnelle de moussage de laquelle on a considéré le seul ruban de base. L'installation comprend un premier tapis transporteur 1 légèrement incliné vers le bas, sur lequel, après l'interposition d'un ruban flexible 2 venant d'un rouleau 3, on verse le mélange réactif formé dans une tête de mélange 4. Avec le temps et, par conséquent, avec l'avancement sur le tapis transporteur 1 qui est maintenu en mouvement continu, le mélange déposé commence sa réaction et son expansion, de sorte que (l'espace étant limité sur les côtés par des rubans non représentés) la mousse qui se forme monte de niveau jusqu'à atteindre en un niveau maximum; le matériel en mousse devient alors solide.

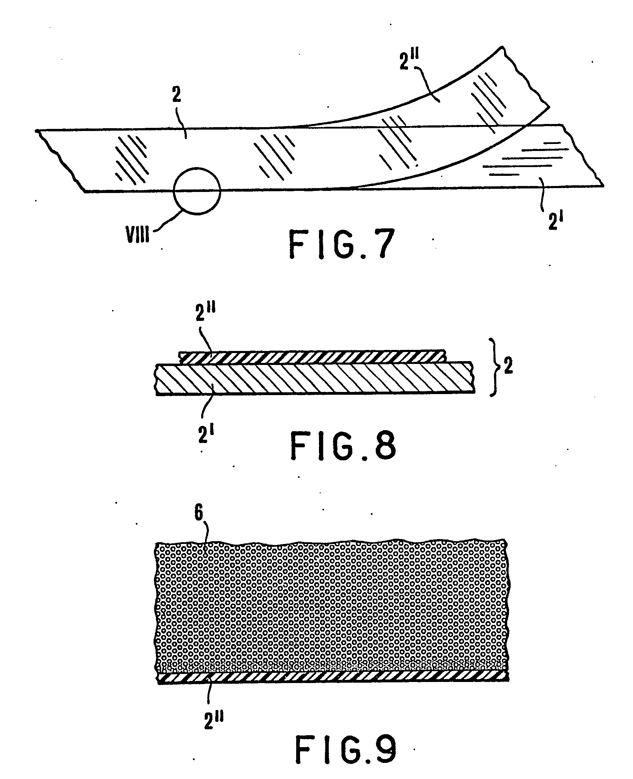

Selon l'application de l'invention, le ruban flexible 2 est formé par un accouplé (figures 7 et 8) comprenant un ruban 2' de papier (qui donne à l'accouplé une rigidité suffisante pour assurer que la correspondante surface du matériel en mousse soit plane et pour permettre une manipulation appropriée du ruban flexible) et un ruban en matière plastique très mince 2'' (qui donne à l'accouplé une imperméabilité substantiellement complète). Ce ruban en matière plastique peut être avantageusement formé de polyéthylène de 5 à 40 microns d'épaisseur ou, plus préférablement encore, de 10 à 20 microns d'épaisseur.

Ces deux composants de l'accouplé sont unis l'un à l'autre de manière qu'ils présentent une adhésion réciproque limitée, suffisante pour éviter tout détachement pendant la manipulation du ruban accouplé et pendant son emploi pour limiter l'espace de moussage, mais telle à consentir facilement le détachement intentionnel des deux composants.

Dans un point de l'installation, où le matériel en mousse 6 a déjà atteint un degré de consolidation tel qu'il n'a plus besoin ultérieurement du support rigide fourni par le ruban de papier qui fait partie du ruban accouplé 2, on détache ledit ruban de papier 2' du ruban de polyéthylène 2'' avec lequel il était accouplé, et le ruban de papier 2'' est recueilli sur un rouleau 7. Dans l'exemple représenté cela se fait en correspondance du rouleau 8 de renvoi final du ruban transporteur incliné 1. Sur un tapis transporteur successif 9 procède le matériel en mousse 6 qui forme une masse dite pain qui porte, comme revêtement superficiel, le ruban de polyéthylène 2'' qui faisait partie de l'accouplé 2 (figure 9). Le pain 6 sera successivement coupé en blocs et laissé mûrir.

Le point où le ruban de papier est détaché du ruban de polyéthylène peut être substantiellement le même où, dans une installation traditionnelle, on détacherait le ruban de papier non accouplé, ou bien il peut même être un peu plus près de la tête de mélange 4, en considération du fait que le détachement, dans ce cas, ne comporte pas une action de pelage du pain et il peut donc être fait en présence d'une condition de consolidation encore inférieure à celle nécessaire pour résister à une action de pelage.

La figure 2, qui se réfère au second exemple d'application de l'invention, montre des parties identiques à celles de la figure 1, indiquées par les mêmes références, mais elle illustre comment, à l'extrémité finale du tapis transporteur 9 (qui est poursuivi par un ultérieur transporteur 10) le ruban de polyéthylène 2'' qui était resté adhérent au pain 6 est détaché lui aussi et il est recueilli sur un rouleau 11. Cela est fait en aval du point de détachement du ruban de papier 2', en un point où le pain 6 a atteint une consolidation telle qui lui consent de résister à l'action de pelage inhérente au détachement du ruban de polyéthylène, action d'ailleurs très modérée en vue de l'imperméabilité de ce ruban, laquelle prévient toute adhésion énergique au pain.

La figure 3 montre, en relation à la tête de mélange 4 et au pain 6, les parties caractéristiques d'une installation du type Hennecke, c'est à dire un ruban flexible 12, provenant d'un rouleau 13, qui est guidé au moyen de plaques 17 lelong de la surface supérieure du matériel 6 en expansion jusqu'au-delà du point 5 où le niveau maximum du matériel est atteint, après quoi il est retiré sur un rouleau 14, éventuellement après avoir été perforé en 15. Dans ce cas, quand on applique l'invention, le ruban 12 doit être un accouplé du même genre qui a été déjà indiqué, et dans le rouleau 14 est recueilli le seul ruban 12' de papier de l'accouplé 12, en laissant procéder le ruban de matière plastique 12'' adhérent à la surface supérieure du pain 6.

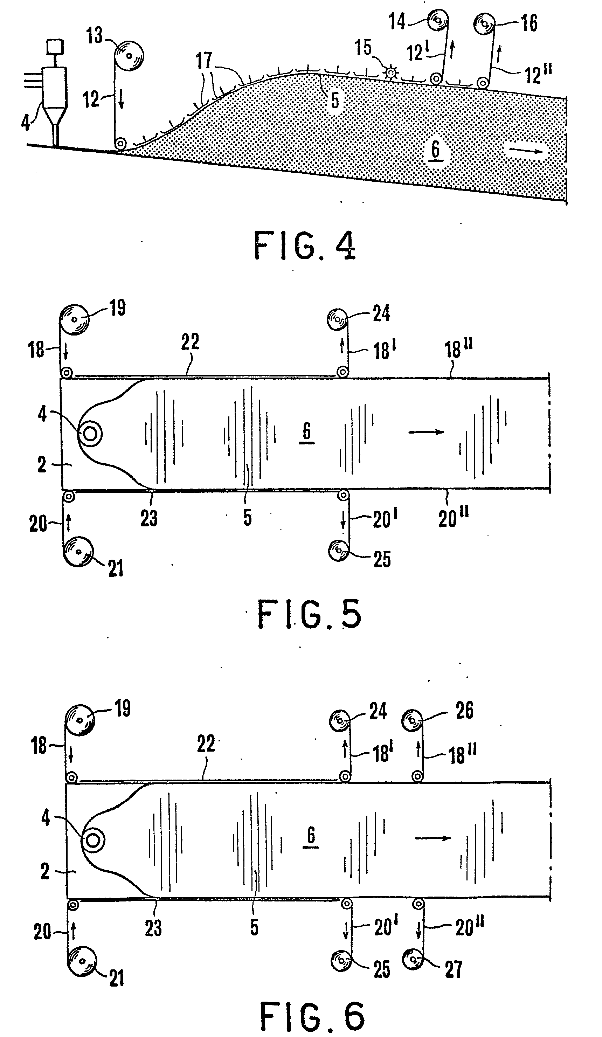

La figure 4 montre comment l'installation selon la figure 3 doit être modifiée quand on veut appliquer l'invention dans sa seconde forme. Dans ce cas, même le ruban de polyéthylène 12″, qui était resté adhérent à la surface supérieure du pain 6, est retiré en un point situé en aval de celui où a été retiré le ruban de papier 12′ recueilli sur le rouleau 14, et, à son tour, il est enroulé pour former un rouleau 16.

La figure 5 montre comment l'invention, dans sa première forme, peut trouver son application pour ce qui concerne les rubans latéraux dans une installation de moussage. Dans le schéma de la figure 5 l'installation est illustrée en plan; la tête de mélange 4 verse le mélange réactif sur le ruban flexible 2, qui recouvre le tapis transporteur de base et sur lequel le mélange fait son expansion pour former le pain 6. L'espace de moussage est limité latéralement par des parois 22 et 23, à l'intérieur desquelles glissent les rubans flexibles 18 et 20 qui viennent des rouleaux 19 et 21. En application de l'invention, ces ruban flexibles sont formés par un accouplé de papier et de matière plastique mince, et les rubans de papier 18′ et 20′ sont retirés, après la consolidation de la mousse, en les séparant des respectifs rubans de matière plastique 18″ et 20″ qui restent adhérents aux surfaces latérales du pain 6, tandis que les rubans de papier 18′ et 20′ sont recueillis sur les rouleaux 24 et 25.

L'invention peut être appliquée dans sa seconde forme même pour ce qui concerne les rubans latéraux, comme le montre la figure 6. Dans ce cas, les rubans de matière plastique 18″ et 20″ qui étaient restés adhérents aux surfaces latérales du pain 6 sont retirés, en des points en aval de ceux où les rubans de papier 18′ et 20′ ont été recueillis sur les rouleaux 24 et 25, et il sont à leur tour enroulés pour former les rouleaux 26 et 27.

Même si, dans la description qui précède, l'application de l'invention dans ses différentes formes a été décrite séparément pour le ruban de base, pour le ruban supérieur et pour les rubans latéraux, il faut bien entendre que les différentes dispositions décrites et illustrées peuvent coexister, c'est à dire que, dans une installation réelle avec plusieurs rubans flexibles, l'invention peut être appliquée à tous les rubans ou bien a une partie ou même à un seul d'entre eux, selon l'opportunité opérative chaque fois constatée.

## Revendications

1. Procédé pour le moussage en continu de matières plastiques, du type dans lequel l'espace de moussage est limité par des rubans flexibles (2, 12, 18, 20) guidés de sorte à accompagner les surfaces correspondantes du matériel (6) en cours d'expansion et de consolidation, et dans lequel chaque ruban flexible comprend un ruban de support de papier (2′, 12′, 18′, 20′) et un ruban de matière plastique (2″, 12″, 18″, 20″), superposé audit ruban de papier du côté intérieur par rapport à l'espace de moussage et ayant une adhésion limitée par rapport audit ruban de papier, caractérisé en ce que comme ruban flexible (2, 12, 18, 20) on emploie un ruban accouplé, préparé et enroulé avant l'introduction dans l'installation de moussage; en ce que ledit ruban flexible comprend un ruban de matière plastique (2″, 12″, 18″, 20″) d'une épaisseur comprise entre 5 et 20 microns; et en ce qu'on détache le ruban de papier (2′, 12′, 18′, 20′) du matériel en mousse formé (6) en le désaccouplant du ruban de matière plastique (2″, 12″, 18″, 20″), en enroulant séparément ledit ruban de papier et en laissant ledit ruban de matière plastique, au moins temporairement, adhérent au matériel en mousse.

2. Procédé selon la revendication 1, caractérisé en ce que ledit ruban de matière plastique (2″, 12″, 18″, 20″) est laissé de façon permanente adhérent au matériel en mousse (6) formé.

3. Procédé selon la revendication 1, appliqué à la fabrication de blocs de polyuréthane en mousse, caractérisé en ce que ledit ruban de matière plastique (2″, 12″, 18″, 20″) est constitué par un ruban de polyéthylène de 10 à 20 microns d'épaisseur.

## Patentansprüche

1. Verfahren zum ununterbrochenen Schäumen von Kunststoffen, der Art bei welcher der Schaumraum durch biegsame Bänder (2, 12, 18, 20) begrenzt ist, die derart geführt sind, dass sie entsprechende Oberflächen des sich unter Schäumen und Erstarren befindlichen Stoffes (6) folgen, und bei welcher jedes biegsame Band ein Tragband aus Papier (2′, 12′, 18′, 20′) und ein das Papierband an der im Verhältnis zum Schaumraum inneren Seite überlappendes, ein gegenüber dem Papierband beschränktes Haftvermögen aufweisendes Kunststoffband (2″, 12″, 18″, 20″) umfasst, dadurch gekennzeichnet, dass als biegsames Band (2, 12, 18, 20) ein gekoppeltes, vor der Einführung in die Schaumanlage vorbereitetes und aufgerolltes Band verwendet wird; dass das biegsame Band ein eine Dicke von 5 bis 20 Mikron aufweisendes Kunststoffband (2″, 12″, 18″, 20″) umfasst; und dass man das Papierband (2′, 12′, 18′, 20′) vom entstandenen Schaumstoff (6) dadurch abtrennt, dass man es vom Kunststoffband (2″, 12″, 18″, 20″) entkoppelt, das Papierband gesondert aufrollt und das Kunststoffband an den Schaumstoff wenigstens zeitweise haften lässt.

2. Verfahren nach Anspruch 1, dadurch gekennzeichnet, dass das Kunststoffband (2″, 12″, 18″, 20″) an den entstandenen Schaumstoffen (6) dauernd haften gelassen wird.

3. Verfahren nach Anspruch 1, zur Herstellung von Blöcken aus geschäumten Polyurethan verwendet, dadurch gekennzeichnet, dass das Kunststoffband (2″, 12″, 18″, 20″) aus einem 10 bis 20 Mikron dicken Polyäthylen besteht.

## Claims

1. A process for the continuous foaming of plastics, of the type in which the foaming space is delimited by means of flexible bands (2, 12, 18, 20) so guided as to follow the corresponding surfaces of the material (6) being foamed and solidified, and in which each flexible band comprises a support paper band (2', 12', 18', 20') and a band of plastic material (2", 12", 18", 20"), superimposed on said paper band on the inner side thereof with respect to the foaming space and having a limited adhesion with respect to said paper band, characterized in that as a flexible band (2, 12, 18, 20) is used a coupled band, prepared and wound before being introduced into the foaming system; that said flexible band comprises a band of plastic material (2", 12", 18", 20") having a thickness from 5 to 20 microns; and that the paper band (2', 12', 18', 20') is detached from the formed foamed material (6) by uncoupling it from the band of plastic material (2", 12", 18", 20"), by separately winding said paper band and leaving said band of plastic material at least temporarily adhere to the foamed material.

2. A process as set forth in Claim 1, characterized in that said band of plastic material (2", 12", 18", 20") is left permanently adhere to the formed foamed material (6).

3. A process as set forth in Claim 1, applied to the manufacture of blocks of foamed polyurethane, characterized in that said band of plastic material (2", 12", 18", 20") is formed by a band of polyethylene having a thickness from 10 to 20 microns.

FIG.1

FIG.2

FIG.3

FIG. 4

FIG. 5

FIG. 6

0 084 384

2 / 3

9

FIG.7

FIG.8

FIG.9